**Europäisches Patentamt**

(19) **European Patent Office**

**Office européen des brevets**

(11) Veröffentlichungsnummer: **0 133 568**
B1

(12) # EUROPÄISCHE PATENTSCHRIFT

(45) Veröffentlichungstag der Patentschrift:
**11.03.87**

(51) Int. Cl.⁴: **G 06 F 13/00, H 04 Q 3/54**

(21) Anmeldenummer: **84109365.1**

(22) Anmeldetag: **07.08.84**

(54) **Schaltungsanordnung für Fernmeldevermittlungsanlagen, insbesondere Fernsprechvermittlungsanlagen, mit Speichern und ihnen individuell zugeordneten Speicherablaufsteuerungen.**

(30) Priorität: **10.08.83 DE 3328861**

(43) Veröffentlichungstag der Anmeldung:
**27.02.85 Patentblatt 85/9**

(45) Bekanntmachung des Hinweises auf die Patenterteilung:
**11.03.87 Patentblatt 87/11**

(84) Benannte Vertragsstaaten:
**AT CH DE FR GB IT LI NL SE**

(56) Entgegenhaltungen:
**EP - A - 0 011 685**
**DE - B - 1 247 707**

**NEUES AUS DER TECHNIK, Nr. 4, 16. August 1982, Seite 2, rechte Spalte, Würzburg, DE; "Anordnung, um das Kopieren eines Softwareprogramms aus einem Speicher zu verhindern"**

(73) Patentinhaber: **Siemens Aktiengesellschaft Berlin und München, Wittelsbacherplatz 2, D-8000 München 2 (DE)**

(72) Erfinder: **Bronold, Josef, Dipl.-Ing., Luitpoldstrasse 14, D-8034 Germering (DE)**

## Beschreibung

Die Erfindung bezieht sich auf eine Schaltungsanordnung für Fernmeldeanlagen, insbesondere Fernsprechvermittlungsanlagen, mit wenigstens zweidimensional aufgebauten Speichern und mit einzeln zur Durchführung von Speicherungsvorgängen des Lesens und des Schreibens und/oder des Überschreibens ansteuerbaren Speicherelementen und mit den Speichern individuell zugeordneten Speicherablaufsteuerungen, die nach Erhalt einer Adresse die Speicherelemente ansteuern und zur Durchführung von Speicherungsvorgängen einen der Art des jeweiligen Speicherungsvorganges entsprechenden Zusatzbefehl, den sie zunächst erhalten haben, zum Speicher hin weitergeben, und mit einer Schutzlogikschalteinrichtung, in der für jede der Adressen ein Freikriterium oder ein Sperrkriterium gespeichert ist, und die aufgrund der jeweils erhaltenen Adresse entweder das Freikriterium oder das Sperrkriterium zu einer Verknüpfungsschaltung hin abgibt, die nur bei Erhalt des Freikriteriums die Durchführung des jeweiligen Speicherungsvorganges (Lesen, Schreiben, Überschreiben) freigibt.

In einer älteren Schaltungsanordnung dieser Art ist die Verknüpfungsschaltung ausgangsseitig mit dem den Zusatzbefehl aufnehmenden Eingang der Speicherablaufsteuerung verbunden. Über einen zweiten Eingang der Verknüpfungsschaltung wird der für die Speicherablaufsteuerung bestimmte Zusatzbefehl aufgenommen. Dieser Zusatzbefehl wird an die Speicherablaufsteuerung also nur weitergegeben, wenn die Schutzlogikschalteinrichtung ein entsprechendes Ausgangskriterium abgibt, wenn also der in ihr durchgeführte Auswertungsvorgang bezüglich der erhaltenen Adresse sagt, dass ein entsprechender Speichervorgang zulässig ist. Eine ähnliche Schaltungsanordnung ist ausserdem beschrieben in dem Artikel «Anordnung, um das Kopieren eines Softwareprogramms aus einem Speicher zu verhindern» aus NEUES AUS DER TECHNIK, Nr. 4, 16. August 1982, Seite 2. Bekanntlich werden die Speicherelemente einzeln (oder auch gruppenweise) eines Speichers mit Hilfe von Adressen angesteuert. Ein Teil der Adressen kann nur Speicherplätze betreffen, an denen Informationen gespeichert sind, die vor einem irrtümlichen oder fehlerhaften Überschreiben geschützt werden müssen, z.B. Programminformationen. Es kann auch Speicherbereiche geben, in denen Informationen gespeichert sind, die einer Geheimhaltung unterliegen, und die nicht von jedermann gelesen werden dürfen. In einer Schutzlogikschalteinrichtung ist deshalb für jede der Adressen ein Freikriterium oder ein Sperrkriterium gespeichert. Die Schutzlogikschalteinrichtung gibt aufgrund der jeweils erhaltenen Adresse entweder das Freikriterium oder das Sperrkriterium zu einer Verknüpfungsschaltung hin ab. Dies kann in der Weise geschehen, dass ein Speicher dadurch in zwei Teile unterteilt wird, dass in der Schutzlogikschalteinrichtung eine bestimmte Grenzadresse gespeichert ist. Alle Adressen, die zahlenmässig kleiner sind als die Grenzadresse oder ebenso gross sind wie diese, bezeichnen Speicherplätze im geschützten Bereich des Speichers. Ist die Adresse eines anzusteuernden Speicherplatzes jedoch grösser als die Grenzadresse, so ist daraus erkennbar, dass der anzusteuernde Speicherplatz sich nicht im geschützten Bereich befindet. Im letzteren Falle gibt die Schutzlogikschalteinrichtung ein Freikriterium ab. Im anderen Fall gibt sie ein Sperrkriterium ab. Es kann auch vorgesehen sein, dass das Fehlen des Freikriteriums als Sperrkriterium gilt. Die Schutzlogikschalteinrichtung erhält also bei jedesmaliger Ansteuerung des Speichers, also jedes Mal, wenn die dem Speicher zugeordnete Speicherablaufsteuerung eine Adresse über einen zentralen Datenbus und einen Lesebefehl oder einen Schreibbefehl bekommt, auch die Adresse, die zur Speicherablaufsteuerung übertragen wird. Die Schutzlogikschalteinrichtung hat nun die Aufgabe, die erhaltene Adresse mit der Grenzadresse zu vergleichen. Der entsprechende Vergleichsvorgang erfordert einen bestimmten Zeitaufwand. Die Grösse dieses Zeitaufwandes hängt von dem technischen Aufwand für die Schutzlogikschalteinrichtung ab. Soll sie mit möglichst geringem technischen Aufwand realisiert werden, so ist ein entsprechend höherer Zeitaufwand für den Vergleichsvorgang erforderlich. Soll der Vergleichsvorgang relativ kurzfristig abgewickelt werden, so ist hierfür bekanntlich ein entsprechend höherer technischer Aufwand erforderlich.

Der der jeweiligen Speicherablaufsteuerung zuzuführende Lesebefehl bzw. Schreibbefehl, der die genannte Verknüpfungsschaltung durchlaufen muss, wird nun durch den Vergleichsvorgang verzögert. Die Weitergabe in der Verknüpfungsschaltung erfolgt erst, wenn nach Anlegung der Adresse und Empfang derselben in der Schutzlogikschalteinrichtung von dieser das Freikriterium zur Verknüpfungsschaltung hin abgegeben worden ist. Dies hat zur Folge, dass die zur Abwicklung eines Speicherungsvorganges (Lesen, Schreiben oder Überschreiben) erforderlichen Schaltungsabläufe innerhalb der Speicherablaufsteuerung erst zu entsprechend späterem Zeitpunkt gestartet werden können.

Für die Erfindung besteht die Aufgabe, sowohl einen höheren schaltungstechnischen Aufwand für die Schutzlogikschalteinrichtung einzusparen als auch den gesamten Zeitbedarf für die Durchführung von Speicherungsvorgängen herabzusetzen.

Die Erfindung löst die gestellte Aufgabe dadurch, dass die Verknüpfungsschaltung zwischen die Speicherablaufsteuerung und den Speicher in einem Informationsweg zur Weitergabe des Zusatzbefehls von der ersteren an den letzteren eingefügt ist und ausser dem Freikriterium auch den von der Speicherablaufsteuerung weitergegebenen Zusatzbefehl erhält, wodurch die in der Speicherablaufsteuerung pro Speicherungsvorgang abzuwickelnden Schaltvorgänge bereits mit Erhalt des Zusatzbefehls in dieser gestartet werden.

Durch die Erfindung wird eine Zeitersparnis für die Durchführung von Speicherungsvorgängen erzielt.

In der Regel wird jeweils der Zusatzbefehl um eine gewisse Zeitspanne später als die Adresse zur Ablaufsteuerung eines Speichers abgegeben. Für die inneren Schaltungsabläufe innerhalb der Speicherablaufsteuerung besteht ausserdem ein gewisser Zeitunterschied zwischen Erhalt und Weitergabe des jeweiligen Zusatzbefehls. Durch die Erfindung lässt sich nun von dem für den Vergleichsvorgang innerhalb der Schutzlogikschalteinrichtung erforderlichen Zeitbedarf ein Teil einsparen; dieser Teil addiert sich aus der genannten Zeitspanne und dem genannten Zeitunterschied.

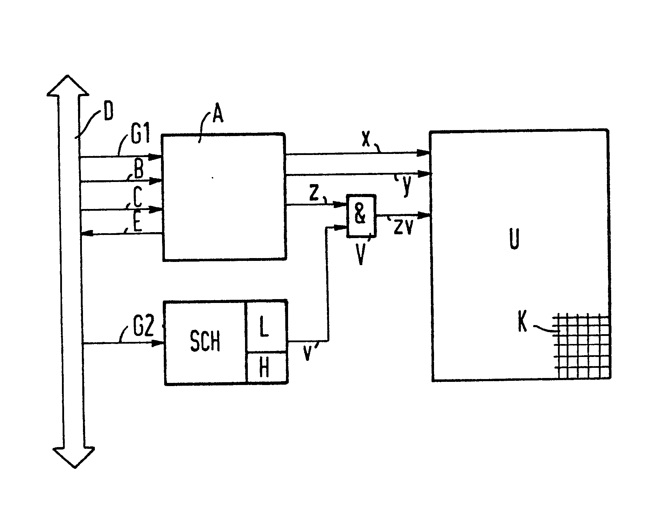

In der Zeichnung ist ein Ausführungsbeispiel der Erfindung nur in wesentlich zu ihrem Verständnis beitragenden Bestandteilen dargestellt. Die Erfindung ist hierauf jedoch keineswegs beschränkt.

Links in der Zeichnung ist vertikal ein zentraler Datenbus D dargestellt. Mit ihm ist eine grössere Anzahl von Speichern jeweils über eine pro Speicher U vorgesehene Ablaufsteuerung A verbunden. Diese Ablaufsteuerung ist eine Schreib- und Leseeinrichtung. Im rechten unteren Teil des Speichers U ist eine koordinatenförmige Anordnung K angedeutet. Die Speicherelemente sind also koordinatenförmig angeordnet, wobei eine Speicherzeile immer eine Anzahl von Speicherelementen enthält. Eine Speicherzeile ist immer zur Speicherung einer Information vorgesehen. Jede Speicherzeile wird mit Hilfe einer Adresse angesteuert. Bei Ansteuerung einer Speicherzeile werden immer alle ihre Speicherelemente einzeln nacheinander angesteuert. Bei entsprechender Ausbildung der Speicherablaufsteuerung ist es auch möglich, mehrere Speicherelemente zugleich anzusteuern.

Der Speicher U ist also zweidimension aufgebaut. Ebensogut wäre es auch möglich, ihn in an sich bekannter Weise dreidimension aufzubauen und anzusteuern. Die im Speicher vorgesehenen Speicherelemente dienen zur Durchführung von Speicherungsvorgängen des Lesens und des Schreibens bzw. des Überschreibens (Löschen der bisher gespeicherten Information und Schreiben einer neuen Information an dem betreffenden Speicherplatz).

Die dem Speicher U individuell zugeordnete Speicherablaufsteuerung A erhält zur Durchführung eines Speicherungsvorganges zunächst eine Adresse über den Weg G1. Diese Adresse kann ein einziges Speicherelement, vorzugsweise aber eine Zeile von Speicherelementen bezeichnen. Durch die Adresse wird jedoch nur der Speicherplatz bezeichnet, an dem etwas ausgeführt werden soll. Deshalb erhält die Speicherablaufsteuerung über den Datenbus, z.B. von einer zentralen informationsverarbeitenden Schalteinrichtung, ausser der Adresse auch noch einen Zusatzbefehl, der die jeweilige Art des durchzuführenden Speicherungsvorganges angibt. Diesen Zusatzbefehl erhält die Speicherablaufsteuerung A über den Weg B, sofern es sich um einen Schreibbefehl handelt, dagegen über den Weg C, wenn es sich um einen Lesebefehl handelt. Die Adresse über den Weg G1 und den Schreibbefehl über den Weg B bzw. den Lesebefehl über den Weg C erhält die Speicherablaufsteuerung nacheinander, d.h. also die Adresse zuerst und den jeweiligen Zusatzbefehl etwas später.

Die Speicherablaufsteuerung A bildet nun aus der Adresse Ansteuersignale für den Speicher U. Hierfür stehen eine Reihe von Zeilenansteuerleitungen x und eine Reihe von Spaltenansteuerleitungen y zur Verfügung. Von diesen ist jeweils nur eine einzige dargestellt. Ausserdem überträgt die Speicherablaufsteuerung über den Stromkreis z den jeweiligen Zusatzbefehl, der einen Lesevorgang oder einen Schreibvorgang bezeichnen kann. Die Weitergabe des jeweiligen Zusatzbefehles vom Stromkreis z über die Verknüpfungsschaltung V und den Stromkreis zv an den Speicher U bewirkt, dass der jeweilige Speicherungsvorgang, also ein Lesevorgang oder ein Schreibvorgang, durchgeführt wird. Dies ist aber davon abhängig, dass der Vergleicher V über den Stromkreis v ein Freikriterium von einer Schutzlogikschalteinrichtung SCH erhält. Die weitere Beschreibung konzentriert sich speziell auf diese Zusammenhänge.

Wie bereits ausgeführt wurde, gibt es im Speicher U einen geschützten Bereich, der nicht ohne weiteres zugänglich ist. Soweit es sich um Lesevorgänge handelt, kann ein solcher Schutz für einen geschützten Bereich sich aus Forderungen des Datenschutzes ergeben. Soweit es sich um Speicherungsvorgänge des Lesens handelt, können in dem zu schützenden Speicherbereich Daten gespeichert sein, die auf keinen Fall verloren gehen dürfen und nur bei einer gewollten Änderung gelöscht werden und durch neue ersetzt werden dürfen. Hierbei kann es sich um Programmablaufdaten handeln.

Es ist nun vorgesehen, dass der Speicher U in nicht dargestellter Weise in zwei Speicherteile unterteilt ist. Diese Unterteilung besteht darin, dass in der Schutzlogikschalteinrichtung SCH eine Grenzadresse in einem Speicherglied H gespeichert ist. Alle Speicherzeilen, die durch eine Adresse bezeichnet sind, die zahlenmässig nicht grösser ist als diese Grenzadresse, gehören zum geschützten Bereich. Um Speicherungsvorgänge in diesem geschützten Bereich vornehmen zu können, ist es erforderlich, dass auf nicht im einzelnen gezeigte Weise eine Zusatzinformation von der betreffenden informationsverarbeitenden Schalteinrichtung zu dem jeweiligen Speicher hin abgegeben wird. In der weitaus überwiegenden Zahl der Fälle wird aber eine Speicherzeile angesteuert, die ausserhalb des geschützten Bereiches liegt. Bei jedesmaliger Ansteuerung des Speichers ist es nun erforderlich, dass geprüft wird, ob die jeweils anzusteuernde Speicherzeile (also eine Anzahl von Speicherelementen) innerhalb des geschützten Bereiches liegt. Hierzu wird die von der informationsverarbeitenden Schalteinrichtung abgegebene Adresse ausserdem über den Weg G2 der Schutzlogikschalteinrichtung SCH zugeführt. Sobald diese die Adresse aufgenommen hat, nimmt sie mit Hilfe eines Vergleichers L einen Vergleich zwischen der erhaltenen Adresse und der im Speicherglied H gespeicherten Grenzadresse vor. Weist die über den Weg G2 empfangene Adresse einen zahlenmässig höheren Wert auf, als die Grenzadresse im Speicherglied H, so gibt die Schutzlogikschalteinrichtung SCH ein Freikriterium zur Verknüpfungsschaltung V über den Weg v ab. Anderenfalls gibt sie ein Sperrkriterium ab; das Sperrkriterium kann auch in einem Fehlen des Freikriteriums bestehen.

Wie bereits ausgeführt wurde, trifft von der jeweiligen verbindungsindividuellen Schalteinrichtung die Adresse immer um eine Zeitspanne früher ein als der jeweilige Zusatzbefehl über den Weg B oder den Weg C. Ausserdem braucht die Speicherablaufsteuerung A auch noch für die Abwicklung der internen Schaltungsabläufe eine gewisse Zeit. Es besteht also zwischen dem Eintreffen des Zusatzbefehls über den Weg B oder den Weg C einerseits und der Weitergabe über den Weg z ein zusätzlicher Zeitunterschied. Die Schutzlogikschalteinrichtung SCH empfängt aber ebenfalls die Adresse zum gleichen Zeitpunkt wie die Speicherablaufsteuerung A. Während nun die Schutzlogikschalteinrichtung SCH mit dem beschriebenen Vergleich beschäftigt ist, verstreicht die genannte Zeitspanne; es schliesst sich der Zeitunterschied zwischen Empfang und Weitergabe des Zusatzbefehls (Weg B oder Weg C/Weg z) an. Schliesslich treffen über die Wege z und v Eingangssignale bei der Verknüpfungsschaltung V ein, die ein Ausgangssignal über den Weg zv weitergibt, sobald an beiden ihrer Eingänge Eingangssignale anliegen. Das Ausgangssignal der Verknüpfungsschaltung V führt unmittelbar zur Durchführung des Schreibvorganges bzw. Lesevorganges im Speicher U. Der erzielte Zeitgewinn ergibt sich daraus, dass der Beginn der Funktionsabläufe in der Speicherablaufsteuerung A unabhängig ist von dem Zeitbedarf für den Vergleichsvorgang in der Schutzlogikschalteinrichtung SCH.

Es ist auch noch auf den weiteren Vorteil hinzuweisen, dass die Abgabe eines Quittungssignals über den Weg E von der Speicherablaufsteuerung A an die zentrale informationsverarbeitende Schalteinrichtung unabhängig ist von dem durch die Schutzlogikschalteinrichtung SCH auszuführenden Vergleichsvorgang. Auch für den Fall, dass die Schutzlogikschalteinrichtung SCH kein Freikriterium oder das Sperrkriterium abgibt, kann die Speicherablaufsteuerung A das Quittungssignal über den Weg E ohne zusätzlichen Zeitverzug und ohne den zusätzlichen Aufwand einer besonders hierfür vorzusehenden Auswertelogik abgeben.

## Patentanspruch

Schaltungsanordnung für Fernmeldeanlagen, insbesondere Fernsprechvermittlungsanlagen, mit wenigstens zweidimensional aufgebauten Speichern (U) und mit einzeln zur Durchführung von Speicherungsvorgängen des Lesens und des Schreibens und/oder des Überschreibens ansteuerbaren Speicherelementen und mit den Speichern individuell zugeordneten Speicherablaufsteuerungen (A), die nach Erhalt einer Adresse die Speicherelemente ansteuern und zur Durchführung von Speicherungsvorgängen einen der Art des jeweiligen Speicherungsvorganges entsprechenden Zusatzbefehl, den sie zunächst erhalten haben, zum Speicher hin weitergeben, und mit einer Schutzlogikschalteinrichtung (SCH), in der für jede der Adressen ein Freikriterium oder ein Sperrkriterium gespeichert ist, und die aufgrund der jeweils erhaltenen Adresse entweder das Freikriterium oder das Sperrkriterium zu einer Verknüpfungsschaltung (V) hin abgibt, die nur bei Erhalt des Freikriteriums die Durchführung des jeweiligen Speicherungsvorganges (Lesen, Schreiben, Überschreiben) freigibt, dadurch gekennzeichnet, dass die Verknüpfungsschaltung (V) zwischen die Speicherablaufsteuerung (A) und den Speicher (U) in einem Informationsweg zur Weitergabe des Zusatzbefehls von der ersteren an den letzteren eingefügt ist und ausser dem Freikriterium auch den von der Speicherablaufsteuerung (A) weitergegebenen Zusatzbefehl erhält, wodurch die in der Speicherablaufsteuerung (A) pro Speicherungsvorgang abzuwickelnden Schaltvorgänge bereits mit Erhalt des Zusatzbefehls in dieser gestartet werden.

## Claim

A circuit arrangement for telecommunications systems, in particular telephone exchange systems, with stores (U) which are of at least two-dimensional construction and with storage elements which can be driven individually in order to perform read and write and/or overwrite storage procedures, and with store flow control units (A) which are individually assigned to the stores and which, having received an address, drive the storage elements and in order to perform storage procedures forward to the store an additional command which corresponds to the nature of the storage procedure in question and which they have previously received, and with a protective logic switching device (SCH) in which a free criterion or a blocked criterion is stored for each of the addresses and which, on the basis of the address which it has received, emits either the free criterion or the blocked criterion to a logic-linking circuit (V) which performs the storage procedure in question (read, write, overwrite) only when it receives the free criterion, characterised in that the logic-linking circuit (V) is interposed between the store flow control unit (A) and the store (U) in an information path for the forwarding of the additional command from the former to the latter and receives, in addition to the free criterion, the additional command forwarded from the flow control unit (A), whereby the switching procedures which are to be carried out in the store flow control unit (A) in respect of each storage procedure are started therein as soon as the additional command is received.

## Revendication

Montage pour installations de télécommunications, notamment pour installations téléphoniques, comportant au moins des mémoires (U) à agencement bidimensionnel et des éléments de mémoire pouvant être commandés individuellement pour l'exécution de processus de mémorisation correspondant à la lecture et à l'enregistrement et/ou à l'enregistrement en surinscription et comportant des dispositifs (A) de commande de cycles de mémoires associés individuellement aux mémoires et qui, après réception d'une adresse, commandent les éléments de mémoire, et qui, pour l'exécution de processus de mémorisation retransmettent à la mémoire une instruction supplémentaire qui correspond au type du processus respectif de mémorisation et qu'ils ont reçu en premier lieu, et comportant un dispositif de commutation logique de protection (SCH) dans lequel un critère de libération ou un critère de blocage est mémorisé pour chacune des adresses et qui sur la base de l'adresse respectivement reçue, envoie soit le critère de libération, soit le critère de blocage à un circuit logique (V), qui, uniquement lors de la réception du critère de libération, déclenche l'exécution du processus respectif de mémorisation (lecture, enregistrement, enregistrement en surinscription), caractérisé par le fait que le circuit logique (V) est inséré entre le dispositif (A) de commande des cycles de mémoire et la mémoire (U) dans un trajet de circulation des informations pour la retransmission de l'instruction supplémentaire du circuit logique à la mémoire et reçoit, outre le critère de libération, également l'instruction supplémentaire retransmise par le dispositif (A) de commande des cycles de mémoire, ce qui a pour effet que les processus de commutation, qui doivent se dérouler dans le dispositif (A) de commande des cycles de mémoire lors de chaque processus de mémorisation, sont déjà déclenchés dans ce dispositif lors de la réception de l'instruction supplémentaire.